# EUROPEAN PATENT APPLICATION

(11) **EP 1 374 970 A1**
(43) Date of publication of application: **02.01.2004**
(21) Application number: 03425319.5
(22) Date of filing: 16.05.2003
(51) Int. Cl.: B01D 46/04, B01D 46/24, B01D 46/46

(54) **A control process and apparatus for blower devices, in particular for cleaning dust filters**

(30) Priority: 20.06.2002 IT MO20020174
(71) Applicant: WAM S.p.A., 41030 Ponte Motta Cavezzo (Modena) (IT)
(72) Inventor: Baraldi, Stefano, 41019 Soliera (Modena) (IT)
(74) Representative: Gotra, Stefano

(57) **Abstract**

The process comprises a stage of applying an energizing signal (120) to a predetermined number of outputs (40b) of a control apparatus of a blower device (30). Each of the outputs (40b) is connectable to a respective solenoid (32) of the device (30) and each of the solenoids (32) is associated to a corresponding filter element (61) of a dust filter (60). The process further comprises a stage of recognition, which recognises which of the outputs (40b) are connected to a corresponding solenoid (32).

## Description

As is known, blower devices for dust filters comprise a source of compressed air, directed to act on a filter surface of a dust filter, by means of an obturator which, in normal filter use is closed and which is opened periodically, when the filter surface is to be freed of dust granules which have been deposited thereon; compressed air is blown onto the filter surface.

Sending compressed air causes detachment of the dust from the filter surface thanks both to the shaking of the surface itself and to the action of the air which is generally blown against the direction of the dust. The obturator can be a diaphragm filter, and is controlled by a solenoid valve, usually de-energized. After a certain period of use, a usually automatic signal causes the blower to operate by energizing the solenoid. The solenoid opens the diaphragm obturator and places the compressed air tank in communication with the filtering surface, the air being injected into the filter and causing detachment of the powder granules.

Generally, each duster filter is made up of a plurality of filtering elements, each of which is associated to a respective solenoid; after a certain time of filter use, during which the filtering elements do not communicate with the compressed air tank, the various solenoids are energized and open the diaphragm obturators, opening thus a communication between the tank and the filter elements.

The compressed air then flows from the tank onto the filter elements, leading to a dusting stage; thereafter the solenoids are closed, shutting the various orifices and therefore the obturators.

The prior art makes available control apparatus for blower devices for cleaning, which singly control the various coils associated to the filter elements making up the filter; these control apparatus are predisposed, on receiving a command signal, to sequentially energize the various solenoids. Thus, the filter elements are cleaned one after another, according to preset time intervals.

In other words, the prior art control apparatus exhibit a plurality of outputs, each connectable to a corresponding coil, which, on being energized, sets the compressed air tank in communication with the filter element associated thereto, setting up a filter cleaning operation.

When the control apparatus receives the command signal, it sequentially energizes all outputs, sending for example a signal of predetermined intensity to each thereof.

A first drawback in this type of apparatus is that the apparatus are provided with a fixed number of outputs, which must correspond exactly to the number of coils, i.e. to the number of filter elements, which are associated to the filter. If this were not so, the sequence in which the filters were cleaned would be dogged by significant delays, due to time lost thanks to outputs not being connected to coils.

Following receipt of a command signal, control apparatus of known type sequentially activate all outputs, independently of the whether the outputs are actually connected or not to a coil; consequently, where there are non-connected outputs, before activating a next output there must be a certain pretimed wait, equal to the time would take to energize a (non-connected) coil.

In the light of the above, the prior-art control apparatus are characterised by being poorly flexible in use, as in order to obtain a correct operation there must be an exact correspondence between the number of outputs on the apparatus and the number of filter elements making up the complete filter.

Further, control apparatus for blower devices can be associated to an additional module, predisposed to measure a pressure difference between the two spaces separated by the filter surface, and to activate the cleaning cycle should the detected value be above a certain threshold.

The difference in pressure is a value of extreme interest, since an excessive clogging of the wall of the filter directly causes an increase in the pressure difference between the two regions: this parameter can therefore be advantageously used in determining the activation of the cleaning cycle.

In any case, the above-described additional module is realized, in practice, as a completely separate device from the control apparatus as described up to now. The additional module is provided with an intelligent hardware structure which is completely independent of the structure finalized at energizing the various coils.

The above-described device leads to considerable problems from the point of view of its size and practicality, as well as the complexity of the circuits needed and the economic outlay for the design and manufacturing thereof.

The main aim of the present invention is to obviate the above-mentioned drawbacks in the prior art by making available a process and a control apparatus for blower devices, in particular for dust filters, which can be used with various different filters, having various numbers of filtering elements.

A further aim of the invention is to make available a control apparatus for blower devices in which the number of outputs can be varied simply, economically and efficiently.

An advantage of the invention is that it provides a process and control apparatus which can be used very effectively with filters that have differing characteristics, without any particular need for modifications or significant variations.

A further advantage is that the apparatus, also in combination with an additional module for measuring the pressure difference between two predetermined space zones, is very small and offers no problems of positioning or association in proximity of the filter devices it is to operate with.

The aims and advantages and others besides are all attained by the device of the invention, as it is characterised in the following claims.

Further characteristics and advantages of the present invention will better emerge from the detailed description that follows of a preferred but non-exclusive embodiment of the invention, illustrated purely by way of a nonlimiting example in the accompanying figures of the drawings, in which:
figure 1 is a block diagram of an apparatus according to the present invention, associated to a blower device for cleaning a dust filter;
figure 2 is a logic structure of a memory, used in the apparatus of figure 1.

With reference to the above figures of the drawings, 1 denotes a control apparatus for a blower device, in particular for cleaning dust filters, in accordance with the present invention.

The apparatus 1 is predisposed to operate in combination with a blower device 30 for cleaning a filter 60, which filter is composed of a predetermined number of filter elements 61.

The blower device 30 essentially comprises a tank 31 of compressed air which, by means of a plurality of solenoids 32, is placed in communication with the filter elements 61 of the filter 60.

In particular, each of the solenoids 32 is associated to a respective filter element 61, and, according to its state of excitation, selectively sends a flow of air from the tank 31 to the filter element 61. Each solenoid 32 can be piloted between two operative conditions, a first operative condition in which the flow or air can pass from the tank 31 to the filter element 61 associated thereto, and a second operative condition, in which the flow of air is obstructed.

The apparatus 1 has the function of managing the energizing of the solenoids 32, performing cleaning cycles of the filter 60 according to a predetermined time lapse, or whenever an excess of dust is detected on the filter elements resulting from a measurement of a difference in pressure between two space zones separated by the filter 60 itself.

The difference can advantageously be measured by a measuring unit 90, which will be better described herein below.

In order to perform the control operations, the apparatus 1 is provided with a processing unit 10, comprising means for activating 56 which, following a command signal 100 received in input, generate in output a corresponding activating signal 110 to pilot the solenoids 32 between the above-mentioned operative conditions.

The connection between the processing unit 10 and the solenoids 32 is achieved through a connection module 40, which exhibits an input 40a, removably connected to the processing block 10, in order to receive the activation signal 110, and a predetermined number of outputs 40b.

Each of the outputs 40b can be connected to a corresponding solenoid 32, so that the solenoid 32 can receive, through the respective output 40b, an energizing signal 120, and be moved between the first and second operative conditions.

The solenoids 32 are normally de-energized and prevent the air in the tank 31 from reaching the filter elements 61. When a cleaning cycle is about to be performed, the processing unit 10 generates in output a plurality of activation signals 110, each of which contains an identification code 111; this code identifies one of the outputs 40b of the connection unit 40.

Thus the processing unit communicates which output 40b is to receive the energizing signal 120, i.e. which of the solenoids 32 is to be energized to carry out the cleaning cycle.

In the same way, the activating signals 110 can constitute distinct portions of a single main signal, which is therefore composed of a sequence of identification codes 111, possibly separated by time intervals of a predetermined duration.

The fact that the connecting module 40 is removably connected to the processing unit 10 makes possible, if necessary, a substitution of the connecting module itself, in conformity with the needs of the specific application.

Various different connection modules 40 can be conveniently predisposed, each having a different number of outputs 40b; according to the type of blower device 30 the apparatus is to be connected to, i.e. according to the number of solenoids 32 which are to be controlled, a connection module 40 having the most suitable number of outputs 40b can be associated to the processing unit 10.

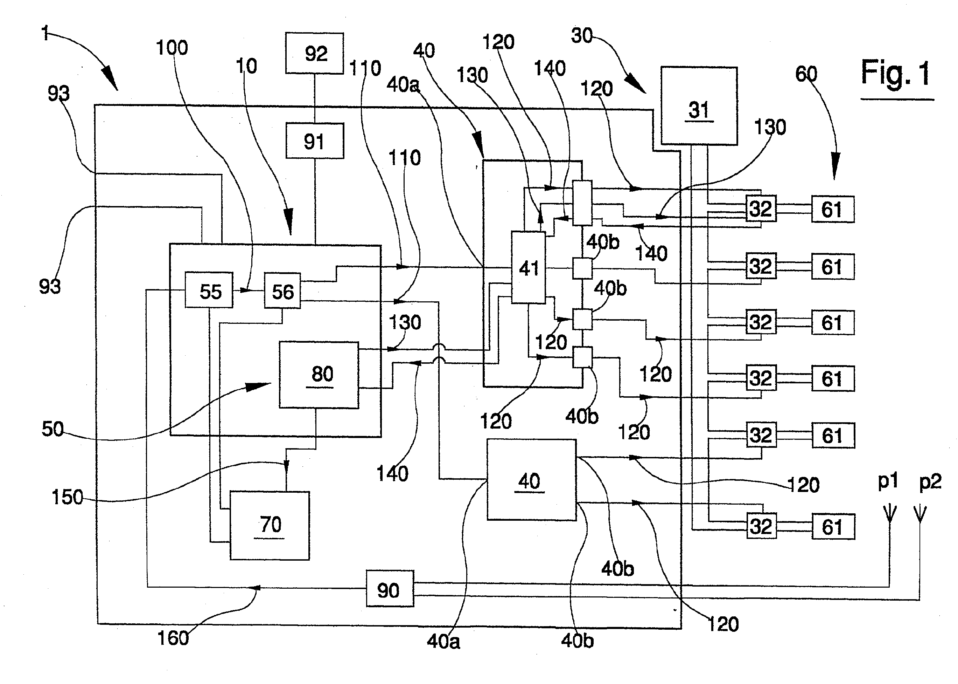

Further, two or more connection modules 40 can be used contemporaneously, as is schematically illustrated in figure 1, as the processing unit 10 is predisposed to be connected with more than one connection module 40. A solution of this type is selected according to the number of solenoids 32 present in the blower device 30.

The various connection modules 40 can be more or less the same and exhibit a hardware structure as will now be described by way of example for one only of them. Alternatively, various modules 40 can be characterised by different circuit elements, but operate in more or less the same way.

The connection module 40 is provided with an addressing unit 41, which receives the activation signal 110 incorporating the identification code 111; then, by comparing the identification code 111 with a pre-stored table of codes, the addressing unit selects the output 40b of the connection module 40 identified by the code 11 and sends the energizing signal 120 there so that the selected solenoid 32 connected to the chosen output 40b is activated.

To optimize the operation of the apparatus 1 with regard to the number of solenoids 32 present in the blower device 30, the processing unit 10 is provided with means for recognising 50, which have the function of recognising which of the outputs 40b of the connection module 40 are effectively connected to a solenoid 32.

The processing unit 10 can be a microprocessor, specially programmed to perform the above-described operations. The means for recognition 50, which are represented in the figures as a discrete unit, can be incorporated in the microprocessor.

Notwithstanding the use of one or more connection modules 40, the number of outputs 40b made available might not exactly match the number of solenoids 32 present in the blower device 30. In this case, by sequentially energizing all of the outputs 40b, and sequencing the various energizing signals 120 with predetermined pauses, damaging time losses would ensue at outputs not connected to solenoids, as the intervals between consecutive energizing signals 120 would be observed anyway.

To avoid this situation arising, before starting up the apparatus 1, the recognition means 50 transmit to each output 40b, through the addressing unit 41, a test signal 130 which can be obtained using a low-tension current.

When the output 40b is connected to a solenoid 32, the current crosses the coil and returns towards the addressing unit 41, providing a response signal 140; vice versa, if no solenoid 32 is connected to the output 40b, the response signal 140 is not supplied.

As it checks one-by-one the state of connection of all the outputs 40b, the apparatus 1 memorises the positive responses confirming connection to a solenoid 32 and consequently knows which of the outputs 40b will have to be energized later on.

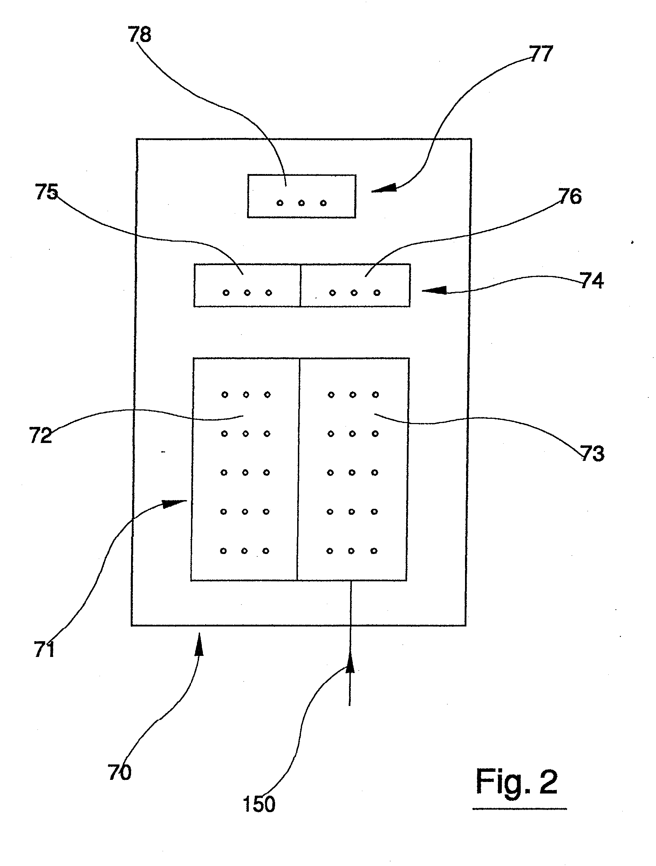

For this purpose, the apparatus comprises a memory 70 (figure 2) which is provided with at least a first register 71 which contains a sort of two-column table, the first of which columns contains a series of reference codes 72, each identifying a corresponding output 40b, the second of which columns contains, for each item in the first column, a status parameter 73, confirming or not a connection between the output 40b identified by the reference code 72 and a corresponding solenoid 32.

The status parameters 73 are stored in the memory 70 by means of an update signal 150 generated by an updating unit 80 provided on the means for recognising 50.

The updating unit 80, according to whether it receives a response signal 140 following the test signal 130 sent to an output 40b, sends the update signal 150 to the memory 70 which then correctly stores it.

Advantageously the reference codes 72 can coincide with the identification codes 111 incorporated in the activation signals 110; for example, the codes can be binary.

The memory 70 (see figure 2) is also provided with a second register 74, which contains a first time parameter 75, indicating a time interval separating two consecutive activation signals 110. Preferably the second register 74 also contains a second time parameter 76, which indicates a time duration for the energizing signals 120.

When a filter cleaning cycle 60 is to be carried out, the activation signals 110 and the corresponding energizing signals 120 are supplied by the activation means 56 and the connection module 40 according to predetermined time scheme. Each of the outputs 40b, which in accordance with what is contained in the first register 71 of the memory 70, is known to be connected to a solenoid 32, is energized by an activation signal 110 incorporating the identification code 111 identifying the output 40b.

Each activation signal 110 is separated from the preceding one and the next one by a time interval a duration of which is expressed by the first time parameter 75. The duration of the current pulses, which constitute the energizing signal 120 and are generated following the activation signal 110, is decided by the second time parameter 76.

It is important to stress that there is a time correspondence between each activation signal 110 and the respective energizing signal 120. This means that, similarly to the activation signals 110, the energizing signals 120 too are separated by a time interval which is represented by the first time parameter 75.

As mentioned above, the processing unit 10 can be removably connected to a measuring unit 90 which measures the difference between pressures p1 and p2 of the two space zones separated by the filter 60. The measuring unit 90 sends a measuring signal 160 to the processing unit 10, which measuring signal 160 incorporates the pressure difference detected.

When the pressure difference exceeds a limit, i.e. when the filtering elements 61 are too clogged, the cleaning cycle is initiated in good time.

The processing unit 10 is provided with means for comparing 55, predisposed to compare the pressure difference received by means of a measuring signal 160 with a reference value 78 stored in a third register in the memory 70. On comparing, if the pressure difference is perceived to be excessive, the means for comparing 55 send a command signal 100 to the activating means 56 and the filter 60 cleaning cycle is initiated.

Like the reference value 78, the first time parameter 75 and the second time parameter 76 contained in the memory 70 can be directly entered by an operator using means for entering data (not illustrated) associated to the processing unit 10. The means for entering could be deep switches or buttons. The measuring unit 90 can be provided with special means for visualization (not illustrated in the figures), possibly for example an LCD display, so that pressure difference values detected can be observed at all times.

It is stressed that the measuring unit 90 is not provided with a processor or equivalent, and that any required operation (for example, a comparison between the pressure difference detected and the pre-memorized reference value 78) will use the processing unit 10; this makes possible a considerable reduction in the size of the apparatus 1, when it is connected to the measuring unit 90, and solves significant problems connected with the positioning of the apparatus 1 in proximity of the filter 60.

To power the various circuits the apparatus 1 comprises a power supply interface 91, which is interpositioned between the devices of the apparatus 1 and a normal power supply 92.

The supply interface 91 comprises a rectifier (for example a diode rectifier) to rectify supply current, followed by means for modulating which might avail for example of PWM technology and which regulate the power and stabilize output tension as absorption and supply voltage vary.

A transformer is included downstream of the means for modulating, the presence of which is directed to a further adaptation of the power supplied by the means for modulating to the circuit elements of the apparatus 1.

Thanks to the presence of the supply interface 91, the apparatus 1 is capable of operating optimally, even if different supplies are connected up (for example 24V, 110V or 220V supplies).

Advantageously the transformer can be associated to a resistance element, for example a fuse, to afford a double guarantee against power surges coming from the supply 92. In order for a surge to reach the circuitry downstream of the supply interface 92, two improbably events have to take place: a short circuit in the fuse and, at the same time, a short circuit in the transformer.

Also, differently to control cards of known type, the apparatus 1 has one input alone, at the supply interface 91, for connecting to an electric supply 92 and for absorption of the necessary power. The second input, which traditionally is also required to be connected to the supply 92 to power the motor of a blower present in the device 30, is now substituted by a "clean contact" i.e. by an input through which a switch is operated (which in turn activates the motor); thus there is no need for a significant absorption of electric power - around 380V for the blower motor - in the apparatus 1.

In addition to this, the apparatus 1 can be provided with a predetermined number of auxiliary outputs 93, providing useful information. For example, one of the outputs 93 could be a 4-20 mA output through which an identical signal to the above-cited measuring signal 160 could be sent in order to inform other devices of the value of the pressure difference detected. Another output 93 could be used to activate a relay, for example on detecting an overpressure, which relay could then set off an alarm and inform personnel of an operational fault.

The following relates to the functioning of the apparatus 1.

When the apparatus 1 is connected to a supply 92, a first recognition stage is carried out, in which the apparatus 1 recognises which of the outputs 40b are effectively connected to a solenoid 32.

In particular, each output 40b receives a test signal 130 which, as mentioned above, can be constituted by a low-tension current. If the output 40b is connected to a solenoid 32, the current sent, after having passed through the coil of the solenoid 32, returns to the apparatus 1, providing a response signal 140. If the output 40b is not connected to a solenoid 32, the response signal 140 is not received.

The outputs 40b connected to solenoids 32 are memorized in the memory 70, which therefore energizes only these when a filter 60 cleaning operation is carried out.

In more detail, as above indicated a reference code 72 is assigned to each output 40a, and a status parameter 73 is assigned to each reference code 72, which status parameter 73 represents a possible connection between the output 40b identified by the reference code 72 and a corresponding solenoid 32.

The status parameter 73 is a binary variable, which can have only two values: a first, indicating the presence of a connection, and a second, indicating the absence of a connection.

Thus, thanks to the data contained in the memory 70, at the moment when the cleaning cycle is carried out, the energizing signal 120 can be sent only to those outputs 40b which are connected to a solenoid 32.

In other words, the stage of applying the energizing signal 120 to the outputs 40b, performed after the recognition stage, is selectively applied to the outputs 40b which, according to what has been stored in memory, emerge as being connected to a solenoid 32.

The process of the present invention advantageously also includes a memorization stage relating to the final output 40b energized, at the end of the cleaning cycle, so that when the following cycle is initiated the energizing signal 120 can be sent to the next output 40b after the memorized final output 40b from the previous cycle. In this way a uniform and complete cleaning of the filter 60 is obtained.

Further, also in the interest of improving the process results, once the normal cleaning cycle is concluded, a further, auxiliary cycle is initiated, lasting ten minutes. Thanks to the memorization of the outputs 40b connected, this time is optimally managed, subdividing it equally for each of the outputs 40b so that each of them is sent an equal number of energizing signals 120.

## Claims

1. A control process for a blower device, in particular for cleaning dust filters, comprising a stage of applying an energizing signal (120) to a predetermined number of outputs (40b) of a control apparatus (1) of the blower device (30), each of which outputs (40b) is connectable to a respective solenoid (32) of the blower device (30), each of which solenoids (32) is associated to a corresponding filter element (61) of a dust filter (60) and can be piloted, by means of the energizing signal (12) between a first operative position, in which a flow of air is sent from a compressed air tank (31) of the blower device (30) onto a respective filter element (61), and a second operative condition, in which the flow of air is stopped, **characterised in that** it further comprises a recognition stage, in which a control is made of which of the outputs (40b) is connected to a respective solenoid (32).

2. The process of claim 1, **characterised in that** the stage of application of the energizing signal (120) is performed selectively on the outputs (40b) which are connected to a corresponding solenoid (32).

3. The process of claim 1 or 2, **characterised in that** the stage of recognition precedes a stage of application of the energizing signal (120).

4. The process of claim 1, **characterised in that** the stage of recognition comprises following substages:
application of a test signal (130) to each of the outputs (40b);
receipt of a corresponding response signal (140) from the outputs (40b) which are connected to a corresponding solenoid (32).

5. The process of claim 4, **characterised in that** it further comprises a stage of memorization of the outlets (40b) connected to a corresponding solenoid (32).

6. The process of claim 5, **characterised in that** the stage of memorization comprises following sub-stages:
associating a reference code (72) to each output (40b);
associating a status parameter (73) to each reference code (72) on receiving the response signal (140), which status parameter (73) indicates a status of connection of the outlet (40b) with a corresponding solenoid (32).

7. A control apparatus for a blower device, in particular for cleaning dust filters, comprising a processing unit (10) provided with means for activating (56) predisposed to receive in input a command signal (100) and to generate in output at least one activation signal (110) for displacing each of a predetermined number of solenoids (32) of the blower device (30) between a first operative condition, in which the solenoid (32) enables a flow of compressed air from a tank (31) of compressed air to a filter element (61) of a dust filter (60) associated to the solenoid (32) and a second operative condition, in which the flow of compressed air is blocked, **characterised in that** it further comprises at least one connection module (40), exhibiting at least one input (40a) which is removably connected to the processing unit (10) for receiving the activation signal (110) and a predetermined number of outlets (40b), each of which is associable to a corresponding solenoid (32), for sending an energizing signal (120) to the solenoid (32) and displacing the solenoid (32) between the first operative condition and the second operative condition.

8. The apparatus of claim 7, **characterised in that** the activatino signal (110) incorporates at least one identificatino code (111) identifying a predetermined outlet (40b) to be energized, the connection module (40) being preferably provided with an addressing unit (41) able to receive the activation signal (110) and to send to the predetermined outlet (40b) a corresponding energizing signal (120) to displace the solenoid connected to the predetermined outlet (40b) between the first operative condition and the second operative condition.

9. The apparatus of claim 7 or 8, **characterised in that** it comprises means for recognition (50) associated to the connection module (40) for recognising which of the outputs (40b) of the connection module (40) are connected to a corresponding solenoid (32), the recognition means (50) being predisposed to send a test signal (130) to each of the outputs (40b) of the connection module (40), preferably through the addressing unit (41), and the recognition means (50) being predisposed to receive a response signal (140) from outputs (40b) which are connected to a corresponding solenoid (32).

10. The apparatus of claim 9, **characterised in that** it further comprises a memory (70) provided with a first register (71) predisposed to memorise which of the outputs (40b) are connected to a corresponding solenoid (32), the first register (71) containing a predetermined number of reference codes (72), each of which is associated to a respective output (40b), and a predetermined number of status parameters (73), each of which is associated to a corresponding reference code (72) which is indicative of a connection between the output (40b) identified by the reference code (72) and a corresponding solenoid (32).

11. The apparatus of claim 10, **characterised in that** the recognition means (50) comprise an updating unit (80) for sending at least one update signal (150) to the first register (71) of the memory (70), which update signal (150) incorporates one or more of the status parameters (73) in accordance with the response signals (140) received from the outputs (40b).

12. The apparatus of claim 10, **characterised in that** the means for activating (56) are predisposed to send a plurality of activation signals (110) to the connection module (40) in a predetermined temporal sequence, each of which activation signals (110) incorporates the identification code (11) of a corresponding output (40b) which receives a respective energizing signal (120), the memory (70) being further provided with a second register (74) for containing a first time parameter (75) which indicates a time interval between two consecutive activation signals (110) and preferably a second time parameter (76) which indicates a time duration of the energizing signals (120) generated by the connection module (40).

13. The apparatus of claim 10, **characterised in that** it further comprises a measuring unit (90) removably connected to the processing unit (10) and able to send the processing unit (10) a measuring signal (160) incorporating a difference of a pressure measured at the dust filter (60).

14. The apparatus of claim 13, **characterised in that** the memory further comprises a third register (77) predisposed to contain at least one reference value (78) for the pressure difference, the processing unit (10) being provided with means for comparing (55) which are able to compare a pressure difference incorporated in the measuring signal (160) with the reference value (78) and generate the command signal (100) directed to the means for energizing according to a result of the comparison.

15. The apparatus of any one of claims from 7 to 14, **characterised in that** it further comprises a plurality of connection modules (40), each exhibiting at least one input (40a) which is removably connected to the processing unit (10) in order to receive an energizing signal (110), and a predetermined number of outputs (40b), each associable to a corresponding solenoid (32), for sending an energizing signal (120) to the corresponding solenoid (32) and for displacing the solenoid (32) between the first operative condition and the second operative condition.

16. A blower device, in particular for cleaning dust filters, comprising:
a tank (31) of compressed air, destined to act on a predetermined number of filter elements (61) of a dust filter (60); a predetermined number of solenoids (32), interpositioned between the tank (31) and the dust filter (60), each of which solenoids (32) is associated to a corresponding filter element (61) and is displaceable between a first operative condition, in which a flow of air from the tank (31) is directed onto the filter element (61), and a second operative condition, in which the flow of air is obstructed, **characterised in that** it further comprises a control apparatus (1) according to any one of claims from 7 to 15.
